# EUROPEAN PATENT APPLICATION

(11) **EP 4 722 029 A1**
(43) Date of publication of application: **08.04.2026**
(21) Application number: 24844533.0
(22) Date of filing: 27.06.2024
(51) Int. Cl.: B60L 58/30, G06F 8/65

(54) **VEHICLE CONTROL METHOD AND APPARATUS, AND VEHICLE AND STORAGE MEDIUM**

(30) Priority: 25.07.2023 CN 202310919041
(71) Applicant: Great Wall Motor Company Limited, Baoding, Hebei 071000 (CN)
(72) Inventor: ZHOU, Mingwang, Baoding, Hebei 071000 (CN)
(74) Representative: Michalski Hüttermann & Partner Patentanwälte mbB
(86) International application number: PCT/CN2024/102010
(87) International publication number: WO 2025/020839

(57) **Abstract**

A method for vehicle control, which includes: during a purging process of a fuel cell of a vehicle, when an over-the-air technology (OTA) upgrade request is received, executing an OTA upgrade process after the purging process is completed; and in a case that the vehicle is in an OTA upgrade mode, when a purging request for the fuel cell is received, performing the purging process of the fuel cell after the OTA upgrade process of is completed. A device using the method, a vehicle, and a storage medium are further disclosed. This method may avoid a functional conflict between an OTA upgrade function and a purging function.

## Description

### CROSS-REFERENCE TO RELATED APPLICATIONS

The present application claims priority to Chinese Patent Application No. 202310919041X, filed with the China National Intellectual Property Administration on July. 25, 2023, and titled "METHOD ADN DEVICE FOR VEHICLE CONTROL, VEHICLE AND STORAGE MEDIUM". The disclosure of the aforementioned application is hereby incorporated by reference in its entireties.

### TECHNICAL FIELD

The present application relates to the field of vehicles technologies, and in particular, to a vehicle control method, a device, a vehicle and a storage medium.

### BACKGROUND

At present, with global resources being increasing scarce and environmental pollution being becoming more and more severe, environmental protection has increasingly become a topic concerned across various industries, and an automotive industry is no exception. Domestic and international automotive industries and their component developers are increasingly paying attention to whether there will be a fuel that may both protect environment and save resources applied toa vehicle. Therefore, a hydrogen fuel cell, as a clean, efficient, and pollution-free electrochemical power generation device, has attracted widespread attention both domestically and internationally. At the same time, a hydrogen fuel cell vehicle has become a mainstream development trend in the development of the current automotive industry. Consequently, safety and economy of a fuel cell vehicle has become a widely concerned topic among various automotive enterprises.

Currently, there is a requirement for purging a fuel cell for the fuel cell vehicle, and occasionally, it is necessary to upgrade an over-the-air technology (OTA). Therefore, there may be a situation where a functional conflict occurs between a purging function and an OTA upgrade function. Consequently, how to avoid the functional conflict between the OTA upgrade function and the purging function has become a technical problem that urgently needs to be solved.

### SUMMARY

The present application provides a method and a device for vehicle control, a vehicle, and a storage medium. The method is capable of avoiding a functional conflict between an OTA upgrade function and a purging function.

In a first aspect, the present application provides the method for the vehicle control. The method includes: during a purging process of a fuel cell of a vehicle, when an over-the-air technology (OTA) upgrade request is received, executing an OTA upgrade process after the purging process is completed; and in a case that the vehicle is in an OTA upgrade mode, when a purging request for the fuel cell is received, performing the purging process of the fuel cell after the OTA upgrade process of is completed.

In the above technical solution, during the purging process of the fuel cell of the vehicle, when the OTA upgrade request is received, the OTA upgrade request will not be immediately responded to. Instead, the OTA update process will be executed after the purging process is completed. In the case that the vehicle is in the OTA upgrade mode, when the purging request for the fuel cell is received, the purging request will not be immediately responded to. Instead, the purging process will be performed on the fuel cell after the OTA upgrade process is completed. By setting an execution logic between the OTA upgrade function and the purging function, it is beneficial to avoid the functional conflict between the OTA upgrade function and the purging function, thereby improving rationality of a vehicle control logic, and thus ensuring that the OTA upgrade process and the purging process are smoothly executed.

In a possible implementation, the when the OTA upgrade request is received, executing the OTA upgrade process after the purging process is completed includes: when the OTA upgrade request is a request to upgrade a high voltage component, controlling a vehicle state to maintain a high-voltage state after the purging process is completed to upgrade the high-voltage component in the high-voltage state; and when the OTA upgrade request is a request to upgrade a low-voltage component, controlling the vehicle state to maintain a low-voltage state after the purging process is completed to upgrade the low-voltage component in the low-voltage state.

In a possible implementation, the when the OTA upgrade request is the request to upgrade the high-voltage component, the method also includes: determining the vehicle state; controlling the vehicle to maintain a first high-voltage state in a case that the vehicle state is the first high-voltage state, where, the vehicle is not drivable in the first high-voltage state; and switching a second high-voltage state to the first high-voltage state in a case that the vehicle state is the second high-voltage state, where, the vehicle is drivable in the second high-voltage state; and the upgrading the high-voltage component in the high-voltage state includes: upgrading the high-voltage component in the first high-voltage state.

In a possible implementation, the when the OTA upgrade request is the request to upgrade the low voltage component, controlling the vehicle state to maintain the low-voltage state after the purging process is completed to upgrade the low-voltage component in the low-voltage state includes: requesting the vehicle to de-energize a high-voltage system when the OTA upgrade request is the request to upgrade low-voltage component; and when it is detected that the vehicle enters the low-voltage state in a preset duration, determining that the purging process is completed, and controlling the vehicle state to maintain the low-voltage state to upgrade the low-voltage component in the low-voltage state.

In a possible implementation, the when the OTA upgrade request is the request to upgrade the high-voltage component, the method also includes: detecting whether a target fault occurs in a fuel cell system of the vehicle; where, the target fault is a fault that prohibits energizing the high-voltage system of the vehicle; and not executing an upgrade process of the high-voltage component in a case that the target fault occurs.

In a possible implementation, the during the purging process of the fuel cell of the vehicle, when the OTA upgrade request is received, the method also includes: estimating a first duration required for completing the purging process, and outputting the first duration to remind a user; and/or, in the case that the vehicle is in the OTA upgrade mode, when the purging request for the fuel cell is received process, the method also includes: estimating a second duration required for completing the OTA upgrade, and outputting the second duration to remind a user.

In a possible implementation, the in the case that the vehicle is in the OTA upgrade mode, when the purging request for the fuel cell is received, performing the purging process of the fuel cell after the OTA upgrade process is completed includes: in the case that the vehicle is in the OTA upgrade mode, when the purging request for the fuel cell is received, controlling a vehicle state to be in a high-voltage state after the OTA upgrade process is completed to perform the purging process of the fuel cell in the high-voltage state.

In a possible implementation, the controlling the vehicle state to be in the high-voltage state after the OTA upgrade process is completed to perform the purging process of the fuel cell in the high-voltage state includes: controlling the vehicle state to maintain the high-voltage state after the OTA upgrade process of a high-voltage component is completed to perform the purging process of the fuel cell in the high-voltage state, where, the vehicle state is the high-voltage state during performing the OTA upgrade process of the high-voltage component; and controlling the vehicle state to switch from a low-voltage state to the high-voltage state after the OTA upgrade process of a low-voltage component is completed to perform the purging process of the fuel cell in the high-voltage state, where, the vehicle state is the low-voltage state during performing the OTA upgrade process of the low-voltage component.

In a possible implementation, the in the case that the vehicle is in the OTA upgrade mode, the method also includes: suspending from executing an auto-wake parking purging function, and resuming executing the auto-wake parking purging function after the vehicle exits the OTA upgrade mode, where, the auto-wake parking purging function includes: periodically waking up a controller of the fuel cell to perform a parking purging progress of the fuel cell.

In a second aspect, the device for the vehicle control is provided. The device includes: a first control module, configured to execute an OTA upgrade process after a purging process is completed when an OTA upgrade request is received during the purging process of a fuel cell of a vehicle; and a second control module, configured to perform the purging process of the fuel cell after the OTA upgrade process is completed when a purging request for the fuel cell is received in a case that the vehicle is in an OTA upgrade mode.

In a possible implementation, the first control module is specifically configured to: control a vehicle state to maintain a high-voltage state after the purging progress is completed when the OTA upgrade request is a request to upgrade a high-voltage component, so as to upgrade the high-voltage component in the high-voltage state; and control the vehicle state to maintain a low-voltage state after the purging process is completed when the OTA upgrade request is a request to upgrade a low-voltage component, so as to upgrade the low-voltage component in the low-voltage state.

In a possible implementation, the first control module is also configured to: determine the vehicle state; control the vehicle to maintain a first high-voltage state in a case that the vehicle state is the first high-voltage state, where the vehicle is not drivable in the first high-voltage state; and switch a second high-voltage state to the first high-voltage state in a case that the vehicle state is the second high-voltage state, where the vehicle is drivable in the second high-voltage state; and control the vehicle state to maintain the first high-voltage state after the purging process is completed, so as to upgrade the high-voltage component in the first high-voltage state.

In a possible implementation, the first control module is specifically configured to: request the vehicle to de-energize a high-voltage system when the OTA upgrade request is the request to upgrade the low-voltage component; and determine the purging process is completed, and control the vehicle state to maintain the low-voltage state when it is detected that the vehicle enters the low-voltage state in a preset duration, so as to upgrade the low-voltage component in the low-voltage state.

In a possible implementation, the first control module is specifically configured to: detect whether a target fault occurs in a fuel cell system of the vehicle when the OTA upgrade request is the request to upgrade the high-voltage component, where the target fault is a fault that prohibits energizing the high-voltage system of the vehicle ; and, not execute an upgrade process of high-voltage component in a case that the target fault occurs.

In a possible implementation, the device also includes an output module. When the OTA upgrade request is received during performing the purging process of the fuel cell of the vehicle, the output module is configured to: estimate a first duration required for completing the purging process, and output the first duration to remind a user; and/or, in the case that the vehicle is in the OTA upgrade mode, when the purging request for the fuel cell is received, the output module is configured to: estimate a second duration required for completing the OTA upgrade process, and output the second duration to remind a user.

In a possible implementation, the second control module 202 is specifically configured to: in the case that the vehicle is in the OTA upgrade mode, control a vehicle state to be in a high-voltage state after the OTA upgrade process is completed when the purging request for the fuel cell is received, so as to perform the purging process of the fuel cell in the high-voltage state.

In a possible implementation, the second control module 202 is specifically configured to: control the vehicle state to maintain the high-voltage state after the OTA upgrade process of a high-voltage component is completed, so as to perform the purging process of the fuel cell in the high-voltage state, where, the vehicle state is the high-voltage state during the OTA upgrade process of the high-voltage component; and control the vehicle state to switch from a low-voltage state to the high-voltage state after the OTA upgrade process of a low-voltage component is completed, so as to perform the purging process of the fuel cell in the high-voltage state, where, the vehicle state is the low-voltage state during the OTA upgrade process of the low-voltage component.

In a possible implementation, the second control module 202 is also configured to: in the case that the vehicle is in the OTA upgrade mode, suspend from executing an auto-wake parking purging function, and resume executing the auto-wake parking purging function after the vehicle exits the OTA upgrade mode, where the auto-wake parking purging function includes: periodically waking up a controller of the fuel cell to perform a parking purging progress of the fuel cell.

In a third aspect, the present application provides the vehicle, which includes a memory and a processor. The memory is configured to store an executable program code, and the processor is configured to invoke and run the executable program code from the memory to enable the vehicle to execute the method in the first aspect or any possible implementation of the first aspect.

In a fourth aspect, the present application provides a computer program product. The computer program product includes a computer program code, when the computer program code is run on a computer, enabling the computer to execute the method in the first aspect or any possible implementation of the first aspect.

In a fifth aspect, the present application provides a computer-readable storage medium. The computer-readable storage medium stores a computer program code, when the computer program code is run on a computer, enabling the computer to execute the method in the first aspect or any possible implementation of the first aspect.

### BRIEF DESCRIPTION OF THE DRAWINGS

FIG. 1 is a schematic flowchart of a method for vehicle control provided by an embodiment of the present application.
FIG. 2 is a schematic structural diagram of a device for vehicle control provided by an embodiment of the present application.
FIG. 3 is a schematic structural diagram of a vehicle provided by an embodiment of the present application.

### DETAILED DESCRIPTION OF THE EMBODIMENTS

During operation, a fuel cell generates a large amount of water in an internal flow channel and an external pipeline of a stack. To prevent an engine from failing to start due to the presence of the liquid water during a next startup of the fuel cell, or to avoid irreversible damage to a stack membrane electrode caused by freezing of the liquid water, generally, it is necessary to perform a purging progress on the fuel cell.

The purging refers to a process of discharging a portion of the water generated by an electrochemical reaction of the fuel cell and retained inside the fuel cell, so as to prevent the excessive residual water from freezing in the fuel cell at a low temperature, which will cause the irreversible damage to the fuel cell. The purging may be divided into a shutdown purging and a parking purging. These two types of the purging are described separately below.

The shutdown purging, also known as a parking purging, specifically refers to a purging progress performed after a vehicle is manually and proactively powered off during a normal driving. For example, when a vehicle controller receives a vehicle shutdown request, the shutdown purging may be performed on the fuel cell to reduce the residual water and a content of water vapor in a gas in the internal flow channel and the external pipeline of the stack.

The parking purging may be understood as: instead of the vehicle being manually and proactively powered off during the normal driving, the purging is performed periodically when the vehicle is in a parked state and a driver is not in the vehicle. Specifically, it may be considered that the vehicle is currently in the parked state after the vehicle is powered off and the driver leaves the vehicle. In the parked state, the vehicle is typically parked in a garage or a parking space. As environmental parameters such as a temperature and a humidity change, if the purging progress is not performed when the purging is needed, condensed water is easily formed inside the fuel cell. The presence of the condensed water will affect the next startup of the fuel cell, and once the condensed water freezes due to a low external temperature, it will easily cause the irreversible damage to the stack membrane electrode, thereby affecting a service life of the fuel cell. Therefore, when the vehicle is in the aforementioned parked state, a periodic parking purging is typically performed, that is, the vehicle is periodically waken up to perform the purging progress on the fuel cell.

With development of vehicle-to-everything technologies, achieving a vehicle Over-the-Air Technology (OTA) has become a trend. Utilizing an OTA function to upgrade various components of the vehicle is an indispensable upgrade activity throughout an automotive lifecycle. An overall architecture of an OTA system includes a cloud, a vehicle-terminal and an upgrade target. Among them, the cloud may be a cloud server platform, and the OTA upgrade target may be a component of the vehicle. The vehicle-terminal includes a central electronic module (CEM), a head unit (HUT) and a telematics box (TBOX). Among them, the CEM is configured to execute an OTA upgrade progress, the HUT is configured to request the vehicle to enter/exit an OTA mode, and the TBOX is configured to receive a software, a firmware, configuration, and other program files transmitted from the cloud. An automotive manufacturer to transmit updated software, firmware, configuration, and other program files from the cloud to a central gateway of the vehicle by using OTA technology, and then upgrades the components inside the vehicle through an internal automotive network.

However, inventors of the present application have found that an OTA upgrade function and a purging function have different requirements for the vehicle state. For example, when the purging function needs to be executed, the vehicle needs to be in a high-voltage state, and when the OTA upgrade function needs to be executed, if an OTA upgrade progress is performed on a high-voltage component, the vehicle needs to be in the high-voltage state, and if the OTA upgrade progress is performed on a low-voltage component, the vehicle needs to be in a low-voltage state. Therefore, if execution times requested for the OTA upgrade function and the purging function overlap, a functional conflict is likely to occur, leading to confusion in a vehicle control logic. For example, if an upgrade request for the low-voltage component is received while the purging function is executed, the vehicle will not know whether to maintain the high-voltage state and continue executing the purging function, or to request the vehicle to de-energize a high-voltage system to execute the upgrade request for the low-voltage component.

Based on this, embodiments of the present application provide a method for vehicle control applied to a vehicle, the vehicle is a vehicle including a fuel cell, and therefore it may also be called as a fuel cell vehicle. In the present embodiment, the functional conflict between the OTA upgrade function and the purging function in the fuel cell vehicle may be avoided.

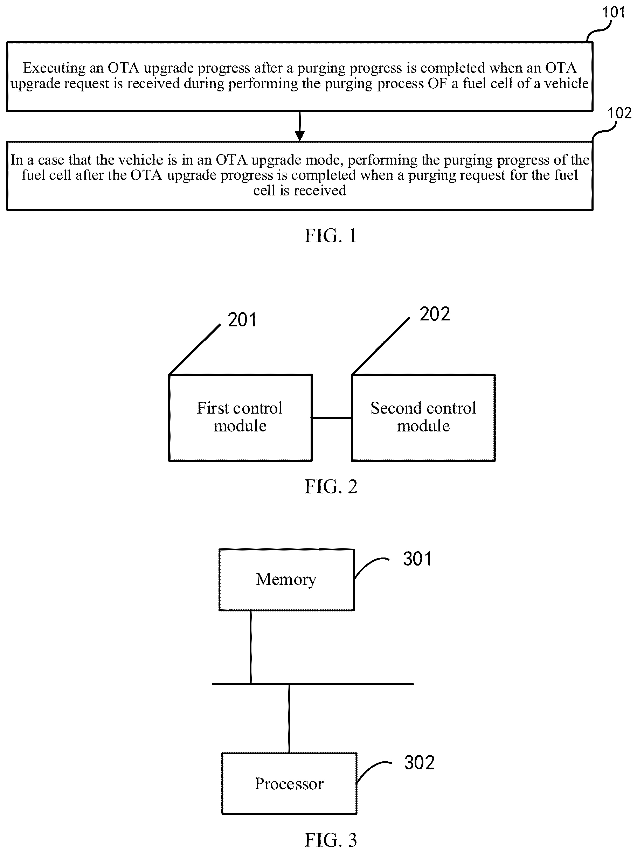

FIG. 1 is a schematic flowchart of a method for vehicle control provided by an embodiment of the present application.

Exemplarily, as shown in FIG. 1, the method includes:
step 101: during a purging process of a fuel cell of a vehicle, when an over-the-air technology (OTA) upgrade request is received, executing an OTA upgrade process after the purging process is completed.
step 102: in a case that the vehicle is in an OTA upgrade mode, when a purging request for the fuel cell is received, performing the purging process of the fuel cell after the OTA upgrade process is completed.

In the embodiment shown in FIG. 1, during performing the purging process of the fuel cell of the vehicle, when the OTA upgrade request is received, the OTA upgrade request will not be immediately responded to, but will be executed after the purging process is completed. In other words, even if the request execution times of the OTA upgrade function and the purging function request overlap, it will not halt uncertain of how to proceed, instead, the ongoing purging progress will be reasonably executed firstly, and then the OTA upgrade progress is executed after the purging progress is completed. In the case that the vehicle is in the OTA upgrade mode, when the purging request for the fuel cell is received, the purging request will not be immediately responded to, and the purging progress will be performed on the fuel cell after the OTA upgrade progress is completed. In other words, even if the request execution times of the OTA upgrade function and the purging function overlap, it will not halt uncertain of how to proceed, instead, the ongoing OTA upgrade progress will be reasonably executed firstly, and then the purging progress is executed after the OTA upgrade progress is completed. In the present embodiment, by setting an execution logic between the OTA upgrade function and the purging function, it is beneficial to avoid the functional conflict between the OTA upgrade function and the purging function, thereby improving rationality of the vehicle control logic, and thus ensuring the OTA upgrade progress and the purging progress to be smoothly executed.

Specific implementations of each step in the embodiment shown in FIG. 1 are described below.

In step 101, during performing the purging process of the fuel cell of the vehicle, when the OTA upgrade request is received, the OTA upgrade request will not be immediately responded to, and will be executed after the purging is completed. In other words, when the purging function is executed, the purging function will not be interrupted by the OTA upgrade function, when the purging function is executed, the OTA upgrade function will not be executed, and the OTA upgrade function will only be executed after the purging function is completed.

Among them, the purging for the fuel cell may be the aforementioned shutdown purging or the parking purging. In the present embodiment, whether the fuel cell is undergoing the shutdown purging or the parking purging progress, the OTA upgrade request received during the shutdown purging or the parking purging progress will not be immediately responded to, and will be responded to after the shutdown purging or the parking purging is completed.

Exemplarily, the aforementioned OTA upgrade request may be either an OTA upgrade request in a normal mode or an OTA upgrade request in a remote mode. The OTA upgrade requests in these two modes are described separately below.

The OTA upgrade request in the normal mode may also be called an OTA upgrade request in an online mode. The OTA upgrade request in the normal mode may be understood as an OTA upgrade request generated based on a user (such as driver) operation. For example, when a user receives an update message pushed by an automotive manufacturer and the user is currently in the vehicle, a corresponding upgrade button triggered via a HUT may be performed, so that the OTA upgrade request in the normal mode is generated. The HUT sends the OTA upgrade request in the normal mode to the CEM via a controller area network (CAN) bus. When the user does not need to upgrade at the moment and wishes to trigger the OTA upgrade at a specific time, the user is capable of setting a target time on the HUT. Therefore, the HUT is capable of generating the OTA upgrade request in the normal mode at the target time and sending the OTA upgrade request in the normal mode to the CEM via the CAN bus.

The OTA upgrade request in the remote mode may be understood as an OTA upgrade request automatically pushed by the automotive manufacturer without the user operation. For example, the automotive manufacturer may send a remote upgrade power-on request signal to the CEM via the TBOX, the remote upgrade power-on request signal may be understood as the OTA upgrade request in the remote mode.

It may be understood that the purging for the fuel cell is generally controlled and executed by a fuel control unit (FCU), and the OTA upgrade is generally executed by the CEM. In the present embodiment, the FCU and CEM may share a working status. For example, if the FCU is executing the purging progress, the FCU is capable of sending a working status of executing the purging progress to the CEM, so that the CEM will aware that the purging progress is currently being executed. Therefore, if the CEM receives the OTA upgrade request, the OTA upgrade request will not be immediately executed, but will be executed after the purging progress is completed. Specifically, if the FCU completes the purging progress, the FCU is capable of sending a working status of completing the purging progress to the CEM, so that the CEM will aware that the purging progress is completed and then start executes the OTA upgrade progress.

Exemplarily, detection items for functional statuses of the purging function and the OTA upgrade may be also added to the HUT. When the HUT detects that the functional status of the purging function is in progress and simultaneously the functional status of the OTA upgrade is requested for execution, it may prompt the user with "Please wait for the purging function to be completed before attempting the OTA upgrade function". When the HUT detects that the functional status of the OTA upgrade is in progress and simultaneously the functional status of the purging function is requested for execution, it may prompt the user with "Please wait for the OTA upgrade function to be completed before attempting the purging function."

In an exemplary embodiment, when the OTA upgrade request is a request to upgrade a high-voltage component, the vehicle state is controlled to maintain a high-voltage state after the purging is completed to upgrade the high-voltage component in the high-voltage state.

It may be understood that components of the vehicle include a high-voltage component and a low-voltage component. Therefore, the OTA upgrade request may be a request to upgrade the high-voltage component or a request to upgrade the low-voltage component. Among them, the high-voltage component is a high-voltage system of the vehicle or is a component involved in the establishment of a high-voltage. The high-voltage component may include: a vehicle controller, a battery manager, a power battery controller, a drive motor, a high voltage distribution box, an electric compressor, a charger controller, a direct current to direct current (DC/DC) converter, a high-voltage harness, or the like. The low-voltage component is a non-high-voltage component, and the low-voltage component is a component unrelated to the high-voltage system of the vehicle and not involved in the establishment of the high-voltage. The low-voltage component may include: an audio system, an audio-visual entertainment system, an instrument system, a body controller module (BCM), a lighting system, an air conditioning control system, or the like.

In specific implementations, during performing the purging process of the fuel cell of the vehicle, the vehicle is in the high-voltage state. The high-voltage state may be a first high-voltage state or a second high-voltage state. In the first high-voltage state, the vehicle is not drivable; and in the second high-voltage state, the vehicle is drivable. In other words, both the first high-voltage state and the second high-voltage state indicate that the vehicle is currently energized with the high voltage, but current states of a power system are different. In the first high-voltage state, the power system is in a state that the vehicle is not drivable, and in the second high-voltage state, the power system is in a state that the vehicle is drivable. For example, the first high-voltage state may be designated as a high-voltage ON state, and the second high-voltage state may be designated as a high-voltage ready state.

In terms of the purging function, theoretically, if the purging progress is completed, the vehicle controller will control the vehicle to power off the high voltage system. However, in the present embodiment, since a request to upgrade the high-voltage component is received during performing the purging process of the fuel cell of the vehicle, the high voltage system of the vehicle will not be powered off after the purging progress is completed, instead, the vehicle state is controlled to maintain the high-voltage state to upgrade the high-voltage component in the high-voltage state, which is beneficial to directly and quickly execute the OTA upgrade progress after the purging progress is completed.

In an exemplary embodiment, when the OTA upgrade request is the request to upgrade the high-voltage component, the aforementioned above method also includes: determining the vehicle state; in a case that the vehicle state is the first high-voltage state, controlling the vehicle to maintain the first high-voltage state; in a case that the vehicle state is the second high-voltage state, switching the second high-voltage state to the first high-voltage state; and controlling the vehicle state to maintain the first high-voltage state after the purging progress is completed, so as to upgrade the high-voltage component in the first high-voltage state.

As aforementioned above, during performing the purging process of the fuel cell of the vehicle, the vehicle may be in the first high-voltage state or the second high-voltage state. For the OTA upgrade function, if the OTA upgrade progress is performed in the second high-voltage state, it is easy to cause the OTA upgrade progress to be unsafe due to the vehicle being in a drivable state. If the OTA upgrade is performed in the first high-voltage state, the vehicle is in a not drivable state, which is beneficial to improving the safety of the OTA upgrade progress to a certain extent. Therefore, in the present embodiment, when the vehicle state is the second high-voltage state, the second high-voltage state is switched to the first high-voltage state, and when the vehicle state is the first high-voltage state, the vehicle is controlled to maintain the first high-voltage state, thereby ensuring that the OTA upgrade request may be executed in the first high-voltage state subsequently, and thus improving the safety of the OTA upgrade progress to a certain extent.

Exemplarily, when it is detected that the purging progress is ongoing, a power train domain control unit (PDCU) of the vehicle is capable of switching the vehicle state from the second high-voltage state to the first high-voltage state when the request to upgrade the high-voltage component is received. In the present embodiment, the PDCU is capable of obtaining the functional statuses of the purging function and the OTA upgrade function, and thus controlling the vehicle state based on the functional status. Among them, the functional statuses may include: a requested execution status, an ongoing execution status, and a completed execution status. For example, if it is detected that the purging progress is performed on the fuel cell of the vehicle, it indicates that the purging function is in the ongoing execution status. If a request for the OTA upgrade is received, it indicates that the OTA upgrade function is in the requested execution status. If it is detected that the purging progress is completed, it indicates that the purging function is in the completed execution status.

In an exemplary embodiment, when the OTA upgrade request is the request to upgrade the high-voltage component, the aforementioned method also includes: detecting whether a target fault occurs in a fuel cell system of the vehicle, where the target fault is a fault that prohibits energizing the high-voltage system; and not executing an upgrade process of the high-voltage component in a case that the target fault occurs.

Exemplarily, the PDCU may detect whether the target fault occurs in the fuel cell system of the vehicle, and the target fault may be a fault with a severity level reaching Level 3. When it is detected that the above target fault occurs, the PDCU is capable of sending a feedback signal indicating that entry into the OTA upgrade mode is prohibited to the vehicle controller, thereby enabling the vehicle controller to aware that entry into the OTA upgrade mode is currently not allowed.

For example, the target fault may be hydrogen leakage in a hydrogen storage system, and a concentration of the leaked hydrogen is greater than a preset threshold, that is, the concentration of the leaked hydrogen is high. In this case, if the high-voltage component is upgraded, there is a risk of explosion due to the high voltage system of the vehicle being energized. Therefore, in the present embodiment, when it is detected that the target fault occurs, a step of upgrading the high-voltage component is not executed, which is beneficial to avoid potential safety hazards that may easily arise during the OTA upgrade process.

Exemplarily, when it is detected that the target fault occurs, a prompt message may also be sent to the user to inform them that the target fault has currently occurred in the vehicle and the OTA upgrade progress may not be performed, which is beneficial to allow the user to timely take measures to repair the vehicle, and thereby eliminating the target fault.

Optionally, when it is detected that the target fault has been eliminated, the step of upgrading the high-voltage component, which was not performed when the target fault occurred, may be automatically executed if an upgrade condition is satisfied. Among them, the upgrade condition may be set according to actual requirements, for example, parameters such as a current speed and a high-voltage power-on status of the vehicle may be obtained to determine whether the upgrade condition are met. When the current speed of the vehicle is zero and the high-voltage power-on status is active, that is, the upgrade condition is determined to be satisfied when the vehicle state is in the high-voltage state.

Optionally, when it is detected that the target fault is eliminated, a reminder message may also be sent to the user to inform them that the target fault has been eliminated, and to inquire whether the user wishes to continue executing the aforementioned step of upgrading the high-voltage component which was not performed when the target fault occurred. If a confirmation from the user is received, the aforementioned step of upgrading the high-voltage component which was not performed when the target fault occurred is continued to be executed, thereby achieving the upgrade of the high-voltage component.

In an exemplary embodiment, when the OTA upgrade request is a request to upgrade the low-voltage component, the vehicle state is controlled to maintain a low-voltage state after the purging progress is completed to upgrade the low-voltage component in the low-voltage state.

In terms of the low-voltage component, if the OTA upgrade progress is to be performed, the vehicle needs to be in the low-voltage state. However, during the purging process, the vehicle is in the high-voltage state. Theoretically, if the purging progress is completed, the vehicle controller will control the vehicle to power off the high voltage system, and will control the vehicle to enter a sleep mode in a period of time after the high voltage is powered off. In the present embodiment, since during the purging process, the OTA upgrade request for the low-voltage component is received, to ensure that both the purging function and an OTA function may be executed normally, after the purging process is completed, the vehicle is controlled to power off the high voltage system, but it will not be controlled to enter the sleep mode, instead, the vehicle is controlled to maintain the low-voltage state to upgrade the low-voltage component in the low-voltage state, ensuring that the low-voltage component process is smoothly performed after the purging process is completed.

In an exemplary embodiment, the aforementioned when the OTA upgrade request is the request to upgrade the low-voltage component, the vehicle state is controlled to maintain the low-voltage state after the purging process is completed to upgrade the low-voltage component in the low-voltage state includes: when the OTA upgrade request is the request to upgrade the low-voltage component, then the vehicle is requested to power off the high voltage system; and when it is detected that the vehicle enters the low-voltage state in a preset duration, then the purging process is determine to be completed, and the vehicle state is controlled to maintain the low-voltage state to upgrade the low-voltage component in the low-voltage state.

Among them, the preset duration may be set based on a purging duration required for completing a normal purging progress, and the purging duration may be a duration required to normally execute a single purging function. For example, the purging duration may be a duration between a first moment and a second moment, where the first moment is a moment when the purging progress starts, and the second moment is a moment when the vehicle is powered off and enters the sleep mode after the purging progress is completed.

Exemplarily, assuming the above purging duration ranges from 4 minutes to 5 minutes, then the above preset duration may be set to 6 minutes. When the OTA upgrade request is the request to upgrade the low-voltage component, then the vehicle may be requested to power off the high voltage system. If it is detected that the vehicle enters the low-voltage state in 6 minutes after the request to power off the high voltage system, then it may be determined that the purging progress is completed, and the vehicle state is controlled to maintain the low-voltage state to upgrade the low-voltage component in the low-voltage state. If it is detected that the vehicle does not enters the low-voltage state in 6 minutes after the request to power off the high voltage system, then the process for upgrading the low-voltage component may be exited. In other words, theoretically, if no related abnormalities occur, the purging function should have been executed in 6 minutes after the request to power off the high voltage system, and the vehicle state should also have been switched from the high-voltage state in the purging progress to the low-voltage state after the purging progress is completed. Therefore, in the present embodiment, it may be detected whether the vehicle enters the low-voltage state in the preset duration after the request to power off the high voltage system. If the vehicle enters the low-voltage state, it indicates that the purging function has been executed, and the low-voltage state may be maintained to execute the step of upgrading the low-voltage component in the low-voltage state. If the vehicle does not enter the low-voltage state, it indicates that an abnormality may occur during the execution of the purging function, preventing it from being switched to the low-voltage state at a moment when it should be switched to the low-voltage state, and then the step of upgrading the low-voltage component may be exited.

Exemplarily, when the OTA upgrade request is the request to upgrade the low-voltage component, the HUT is capable of requesting the PDCU to power off the high voltage system. For example, the HUT may send a high voltage shutdown request to the PDCU. After receiving the high voltage shutdown request, if it is detected that the purging function is in progress, the PDCU will temporarily not respond to the high voltage shutdown request. After detecting that the purging function has been executed, the PDCU will respond to the high voltage shutdown request to control the vehicle to power off the high voltage system, thereby enabling the vehicle to enter the low-voltage state, and the vehicle state is controlled to maintain the low-voltage state to complete the upgrade of the low-voltage component in the low-voltage state.

In an exemplary embodiment, during performing the purging process of the fuel cell of the vehicle, when the received OTA upgrade requests include a request to upgrade the high-voltage component and a request to upgrade the low-voltage component, the vehicle state is controlled to maintain the first high-voltage state after the purging progress is completed to upgrade the high-voltage component in the first high-voltage state. After the upgrade progress of the high-voltage component is completed, the vehicle state is switched from the first high-voltage state to the low-voltage state, and the vehicle is controlled to maintain the low-voltage state to upgrade the low-voltage component in the low-voltage state. After the upgrade of the low-voltage component is completed, the vehicle may be further controlled to enter the sleep mode according to actual requirements.

In the present embodiment, even if both the request to upgrade the high-voltage component and the request to upgrade the low-voltage component are received during the purging process, the purging progress, the upgrade of the high-voltage component, and the upgrade of the low-voltage component may be sequentially executed in a reasonable order, thereby ensuring rationality of the vehicle control logic and realizing the purging function and the OTA upgrade function.

In step 102, in a case that the vehicle is in the OTA upgrade mode, when the purging request for the fuel cell is received, the purging request will not be immediately responded to, instead, the purging progress will be performed on the fuel cell after the OTA upgrade progress is completed. In other words, if the OTA upgrade function is in progress, the purging function will not be executed, but will be executed only after the OTA upgrade function is completed. Among them, the vehicle being in the OTA upgrade mode indicates that an upgrade function for the component of the vehicle is currently executed, which may involve upgrading the high-voltage component or upgrading the low-voltage component.

In an exemplary embodiment, in the case that the vehicle is in the OTA upgrade mode, when the purging request for the fuel cell is received, the vehicle state is controlled to be in the high-voltage state after the OTA upgrade progress is completed to perform the purging progress of the fuel cell in the high-voltage state.

It may be understood that, theoretically, after the OTA upgrade progress is completed, the vehicle will be controlled to power off and enter the sleep mode. However, since in the present embodiment, it is equivalent to receiving the purging request for the fuel cell during the OTA upgrade process, and therefore, in the present embodiment, the vehicle will not be controlled to power off and enter the sleep after the OTA upgrade progress is completed, but will be controlled to be in the high-voltage state, so that the purging progress for the fuel cell is completed in the high-voltage state. Among them, the high-voltage state may be the aforementioned first high-voltage state or the aforementioned second high-voltage state. When the purging progress for the fuel cell is completed, the vehicle may be controlled to power off and enter the sleep mode.

Exemplarily, an implementation mode of the aforementioned step 102 includes: controlling the vehicle state to maintain the high-voltage state after the OTA upgrade progress for the high-voltage component is completed to perform the purging progress of the fuel cell in the high-voltage state. Among them, the vehicle state is the high-voltage state during performing the OTA upgrade process on the high-voltage component.

It may be understood that when the vehicle is in the OTA upgrade mode, if the OTA upgrade progress performed in the OTA upgrade mode is to perform the OTA upgrade progress on the high-voltage component, it indicates that a current vehicle state is the high-voltage state, and the high-voltage state may specifically be the first high-voltage state to ensure that the high-voltage component be safely upgraded. After the OTA upgrade progress for the high-voltage component is completed, the vehicle may be controlled to maintain the aforementioned high-voltage state, and then the purging progress is performed on the fuel cell in the high-voltage state. In a specific implementation, to ensure that the purging progress is safely performed, performing the purging progress of the fuel cell in the high-voltage state specifically involves performing the purging progress of the fuel cell in the aforementioned first high-voltage state.

Exemplarily, the implementation of the aforementioned step 102 includes: controlling the vehicle state to switch from the low-voltage state to the high-voltage state after the OTA upgrade progress for the low-voltage component is completed to perform the purging progress of the fuel cell in the high-voltage state. Among them, the vehicle state is the low-voltage state during performing the OTA upgrade process on the low-voltage component.

It may be understood that when the vehicle is in the OTA upgrade mode, if the OTA upgrade progress performed in the OTA upgrade mode is to perform the OTA upgrade progress on the low-voltage component, it indicates that the current vehicle state is the low-voltage state. After the OTA upgrade progress for the low-voltage component is completed, the vehicle state may be controlled to switch from the low-voltage state to the high-voltage state to perform the purging progress of the fuel cell in the aforementioned high-voltage state. In a specific implementation, to ensure that the purging progress is safely executed, the aforementioned switching from the low-voltage state to the high-voltage state may specifically involve switching from the low-voltage state to the first high-voltage state to perform the purging progress of the fuel cell in the aforementioned first high-voltage state.

In the present embodiment, whether the OTA upgrade progress for the low-voltage component is currently performed or the OTA upgrade progress for the high-voltage component is currently performed, the purging progress for the fuel cell may be smoothly performed after the OTA upgrade progress is completed.

In an exemplary embodiment, when the vehicle is in the OTA upgrade mode, execution of an auto-wake parking purging function may be suspended, that is, the auto-wake parking purging function is not executed. Among them, the auto-wake parking purging function refers to a function that a controller of the fuel cell is periodically waken up to perform the parking purging on the fuel cell. The vehicle exits the OTA upgrade mode after the OTA upgrade progress is completed, and the execution of the auto-wake parking purging function will be resumed.

Exemplarily, when the vehicle is in the OTA upgrade mode, the CEM of the vehicle is capable of sending an OTA upgrade mode entry signal to the PDCU, and the OTA upgrade mode entry signal indicates that the vehicle is in the OTA upgrade mode. When the PDCU receives the OTA upgrade mode entry signal, the execution of the auto-wake parking purging function may be suspended. When the PDCU receives an OTA upgrade mode exit signal, it indicates that the CEM has completed the execution of the OTA upgrade progress and exited the OTA upgrade mode, thereby allowing the PDCU to resume the execution of the auto-wake parking purging function.

Exemplarily, when the PDCU receives a remote upgrade power mode signal, which may be denoted as RemUpgrdModSysPower, if a status of the remote upgrade power mode signal is an ON state, the vehicle is determined to be in a remote OTA upgrade mode. The remote OTA upgrade mode may be understood as an OTA upgrade mode entered after receiving an OTA upgrade request of the aforementioned remote mode.

Exemplarily, when the PDCU receives an online upgrade mode signal, the vehicle is determined to be in an online OTA upgrade mode, and the online upgrade mode signal may be denoted as OTA_UpgrdModSts. The online OTA upgrade mode may be understood as an OTA upgrade mode entered after receiving an OTA upgrade request of the aforementioned online mode.

In an exemplary embodiment, during performing the purging process of the fuel cell of the vehicle, when the OTA upgrade request is received, a first duration required to complete the purging process may also be estimated, and the first duration may be output to remind the user. Among them, the first duration may be understood as a waiting duration required from receiving the OTA upgrade request to starting to execute the OTA upgrade process. Outputting the first duration is beneficial to allow the user to know how long it will take to start executing the OTA upgrade process.

Exemplarily, the outputting the first duration may involve displaying the first duration on a display interface of the HUT, thereby facilitating the user to view. The outputting the first duration may also involve broadcasting the first duration in a form of voice, so that the user may understand the waiting duration required to execute the OTA upgrade process.

In an exemplary embodiment, in the case that the vehicle is in the OTA upgrade mode, when the purging request for the fuel cell is received, a second duration required to complete the OTA upgrade may also be estimated, and the second duration may be output to remind the user. Among them, the second duration may be understood as a waiting duration required from receiving the purging request to starting to execute the purging function. Outputting the second duration is beneficial to allow the user to know how long it will take to start executing the purging function.

Exemplarily, the outputting the second duration may involve displaying the second duration on the display interface of the HUT, thereby facilitating the user to view. The outputting the second duration may also involve broadcasting the first duration in the form of the voice, so that the user may understand the waiting duration required to execute the purging function.

In an exemplary embodiment, the aforementioned outputting the first duration to remind the user and the outputting the second duration to remind the user may be performed when the user is detected in the vehicle, so as to ensure effectiveness of the reminder, and thereby avoiding invalid reminder when the user is not in the vehicle.

In the present embodiment, a conflict handling method is provided for the OTA upgrade function and the purging function, in other words, if the purging function is being executed, the OTA upgrade function may not interrupt the purging function, and the OTA upgrade function may be executed after the purging function is completed. If the OTA upgrade function is being executed, the purging function may not interrupt the OTA upgrade function, and the purging function may be executed after the OTA upgrade function is completed. The aforementioned conflict handling method is beneficial to avoid the functional conflict when the request times for the OTA upgrade function and the purging function overlap, thereby improving the rationality of the vehicle control logic, and thus enabling the OTA upgrade function and the purging function to be smoothly executed. Moreover, execution conditions of the OTA upgrade function are added with a check of whether the hydrogen storage system is faulty. If a fault level has reached a level that prohibits energizing the high-voltage system, the PDCU will determine that a condition for entering the vehicle OTA mode is not satisfied, and the OTA upgrade function will not be executed, which is beneficial to avoid safety hazards.

FIG. 2 is a schematic structural diagram of a device for purging control provided by an embodiment of the present application.

Exemplarily, as shown in FIG. 2, the device includes:
a first control module 201: configured to execute an OTA upgrade process after a purging process is completed when an OTA upgrade request is received performing the purging process of a fuel cell of a vehicle; and
a second control module 202: configured to perform the purging process of the fuel cell after the OTA upgrade process is completed when s purging request for the fuel cell is received in a case that the vehicle is in an OTA upgrade mode.

In a possible implementation, the first control module 201 is specifically configured to: control a vehicle state to maintain a high-voltage state after the purging progress is completed when the OTA upgrade request is a request to upgrade a high-voltage component, so as to upgrade the high-voltage component in the high-voltage state; and control the vehicle state to maintain a low-voltage state after the purging progress is completed when the OTA upgrade request is a request to upgrade a low-voltage component, so as to upgrade the low-voltage component in the low-voltage state.

In a possible implementation, the first control module 201 is also configured to: determine the vehicle state; control the vehicle to maintain a first high-voltage state in a case that the vehicle state is a first high-voltage state, among them, the vehicle is not drivable in the first high-voltage state; and switch a second high-voltage state to the first high-voltage state in a case that the vehicle state is the second high-voltage state, among them, the vehicle is drivable in the second high-voltage state; and control the vehicle state to maintain the first high-voltage state after the purging progress is completed, so as to upgrade the high-voltage component in the first high-voltage state.

In a possible implementation, the first control module 201 is specifically configured to: request the vehicle to de-energize a high-voltage system when the OTA upgrade request is the request to upgrade the low-voltage component; when it is detected that the vehicle enters the low-voltage state in a preset duration, determine the purging process is completed, and control the vehicle state to maintain the low-voltage state, so as to upgrade the low-voltage component in the low-voltage state.

In a possible implementation, the first control module 201 is specifically configured to: detect whether a target fault occurs in the fuel cell system of the vehicle when the OTA upgrade request is the request to upgrade the high-voltage component, among them, the target fault is a fault that prohibits energizing the high-voltage system of the vehicle; and in a case that the target fault occurs, not execute an upgrade process of the high-voltage component.

In a possible implementation, the device also includes an output module. During performing the purging process of the fuel cell of the vehicle, when an OTA upgrade request is received, the output module is configured to estimate a first duration required for completing the purging process, and outputting the first duration to remind a user; and/or, in the case that the vehicle is in the OTA upgrade mode, when the purging request for the fuel cell is received, the output module is configured to estimate a second duration required for completing the OTA upgrade process, and output the second duration to remind a user.

In a possible implementation, the second control module 202 is specifically configured to: in the case that the vehicle is in the OTA upgrade mode, control a vehicle state to be in a high-voltage state after the OTA upgrade process is completed when the purging request for the fuel cell is received, so as to perform the purging process of the fuel cell in the high-voltage state.

In a possible implementation, the second control module 202 is specifically configured to: control the vehicle state to maintain the high-voltage state after the OTA upgrade process of a high-voltage component is completed, so as to perform the purging process of the fuel cell in the high-voltage state, among them, the vehicle state is the high-voltage state during performing the OTA upgrade process of the high-voltage component; and control the vehicle state to switch from the low-voltage state to the high-voltage state after the OTA upgrade process of a low-voltage component is completed, so as to perform the purging process of the fuel cell in the high-voltage state, among them, the vehicle state is the low-voltage state during a process of performing the OTA upgrade process of the low-voltage component.

In a possible implementation, the second control module 202 is also configured to: suspend from executing an auto-wake parking purging function when the vehicle is in the OTA upgrade mode, and resume executing the auto-wake parking purging function after the vehicle exits the OTA upgrade mode, among them, the auto-wake parking purging function is periodically waking up a controller of the fuel cell to perform a parking purging progress of the fuel cell.

FIG. 3 is a schematic structural diagram of a vehicle provided by an embodiment of the present application.

Exemplarily, as shown in FIG. 3, the vehicle 300 includes a memory 301 and a processor 302, where the memory 301 stores an executable program code, and the processor 302 is configured to invoke and run the executable program code to execute a method for vehicle control.

In the present embodiment, functional modules of the vehicle may be divided according to the above method examples. For example, each functional module may correspond to a specific function, or two or more functions may be integrated into a processing module, and the above integrated module may be implemented in a form of a hardware. It should be noted that, the division of the modules in the present embodiment is illustrative, and merely represents the division of logical functions, and there may be other division methods in an actual implementation.

In a case of dividing each functional module according to each function, the vehicle may include: a first control module and a second control module, and the like. It should be noted that all relevant content of each step involved in the above method embodiment may be referred to functional description of a corresponding functional module, and details will not be described herein again.

The vehicle provided in the embodiment is configured to execute the above method of the vehicle control, and therefore, a same effect as the above implementation of the method may be achieved.

In the case of an integrated unit being adopted, the vehicle may include a processing module and a storage module. Among them, the processing module may be configured to control and manage an action of the vehicle. The storage module may be configured to support the vehicle to execute mutual program codes and data, and the like.

Among them, the processing module may be a processor or a controller, which may implement or execute various exemplary logic blocks, modules, and circuits represented in conjunction with the content disclosed in the present application. The processor may also be a combination configured to perform a computing function, for example, including a combination of one or more microprocessor, a combination of a digital signal processing (DSP) and a microprocessor, or the like, and the storage module may be a memory.

The embodiment also provides a computer-readable storage medium storing a computer program code, and when the computer program code is run on a computer, it makes the computer execute the above relevant method steps to implement the method for the vehicle control in the above embodiment.

The embodiment also provides a computer program product, and when the computer program product is run on a computer, it makes the computer execute the above relevant steps to implement the method for the vehicle control in the above embodiment.

In addition, the vehicle provided in the embodiment of the present application may specifically be a chip, an assembly, or a module, and the vehicle may include a processor and memory connected to each other, among them, the memory is configured to store instructions, and when the vehicle is run, the processor may invoke and execute the instructions to make the chip execute the method for the vehicle control in the above embodiment.

Among them, the vehicle, the computer-readable storage medium, the computer program product, or the chip provided in the embodiment are all used for executing corresponding methods provided above, and thus beneficial effects they may achieve may refer to the beneficial effects in the corresponding methods provided above, and details will not be described herein again.

Based on the description of the above implementations, those with ordinary skill in the art may understand that, for convenience and conciseness of the description, only the division of the above functional modules is taken as an example, and in an actual application, the above functions may be assigned to different functional modules to execute as required, that is, an internal structure of the device is divided into different functional modules to complete all or a portion of the functions described above.

In the embodiments provided in the present application, it should be understood that the disclosed devices and methods may be implemented in other ways. For example, device embodiments described above are only illustrative, for example, the division of a module or a unit is only logical function division, and there may be other division methods in an actual implementation. For example, a plurality of units or components may be combined or be integrated into another device, or some features may be ignored or not be executed. In addition, mutual coupling, direct coupling or a communication connection between each other shown or discussed above may be indirect coupling or communication connection through some interfaces, devices or units, which may be electrical, mechanical or other forms.

The above content is only the specific implementation of the present application, and the protection scope of the present application is not limited to this. Any changes or replacements that can be easily conceived by those skilled in the art within the technical scope disclosed in the present application should be covered within the protection scope of the present application. Therefore, the protection scope of the present application should be subject to the protection scope of claims.

## Claims

1. A method for vehicle control, comprising:
executing, during a purging process of a fuel cell of a vehicle, when an over-the-air technology (OTA) upgrade request is received, an OTA upgrade process after the purging process is completed; and
in a case that the vehicle is in an OTA upgrade mode, performing, when a purging request for the fuel cell is received, the purging process of the fuel cell after the OTA upgrade process is completed.

2. The method according to claim 1, wherein the when the OTA upgrade request is received, executing the OTA upgrade process after the purging process is completed comprises:
controlling, when the OTA upgrade request is a request to upgrade a high voltage component, a vehicle state to maintain a high-voltage state after the purging process is completed to upgrade the high-voltage component in the high-voltage state; and
controlling, when the OTA upgrade request is a request to upgrade a low voltage component, the vehicle state to maintain a low-voltage state after the purging process is completed to upgrade the low-voltage component in the low-voltage state.

3. The method according to claim 2, wherein the when the OTA upgrade request is the request to upgrade the high-voltage component, the method further comprises:
determining the vehicle state;
controlling, the vehicle to maintain a first high-voltage state in a case that the vehicle state is the first high-voltage state, wherein, the vehicle is not drivable in the first high-voltage state; and
switching a second high-voltage state to the first high-voltage state in a case that the vehicle state is the second high-voltage state, wherein, the vehicle is drivable in the second high-voltage state; and
the upgrading the high-voltage component in the high-voltage state comprises:
upgrading the high-voltage component in the first high-voltage state.

4. The method according to claim 2, wherein the when the OTA upgrade request is the request to upgrade the low voltage component, controlling the vehicle state to maintain the low-voltage state after the purging process is completed to upgrade the low-voltage component in the low-voltage state comprises:
requesting, when the OTA upgrade request is the request to upgrade the low-voltage component, the vehicle to de-energize a high-voltage system; and
when it is detected that the vehicle enters the low-voltage state in a preset duration, determining that the purging process is completed, and controlling the vehicle state to maintain the low-voltage state to upgrade the low-voltage component in the low-voltage state.

5. The method according to claim 2, wherein the when the OTA upgrade request is the request to upgrade the high-voltage component, the method further comprises:
detecting whether a target fault occurs in a fuel cell system of the vehicle, wherein, the target fault is a fault that prohibits energizing the high-voltage system of the vehicle; and
not executing an upgrade process of the high-voltage component in a case that the target fault occurs.

6. The method according to claim 1, wherein the during the purging process of the fuel cell of the vehicle, when the OTA upgrade request is received, the method further comprises:
estimating a first duration required for completing the purging process, and outputting the first duration to remind a user; and/or,
in the case that the vehicle is in the OTA upgrade mode, when the purging request for the fuel cell is received, the method further comprises:
estimating a second duration required for completing the OTA upgrade process, and outputting the second duration to remind a user.

7. The method according to claim 1, wherein the in the case that the vehicle is in the OTA upgrade mode, when the purging request for the fuel cell is received, performing the purging process of the fuel cell after the OTA upgrade process is completed comprises:
in the case that the vehicle is in the OTA upgrade mode, controlling, when the purging request for the fuel cell is received, a vehicle state to be in a high-voltage state after the OTA upgrade process is completed to perform the purging process of the fuel cell in the high-voltage state.

8. The method according to claim 7, wherein the controlling the vehicle state to be in the high-voltage state after the OTA upgrade process is completed to perform the purging process of the fuel cell in the high-voltage state comprises:
controlling the vehicle state to maintain the high-voltage state after the OTA upgrade process of a high-voltage component is completed to perform the purging process of the fuel cell in the high-voltage state, wherein, the vehicle state is the high-voltage state during performing the OTA upgrade process of the high-voltage component; and
controlling the vehicle state to switch from a low-voltage state to the high-voltage state after the OTA upgrade process of a low-voltage component is completed to perform the purging process of the fuel cell in the high-voltage state, wherein, the vehicle state is the low-voltage state during performing the OTA upgrade process of the low-voltage component.

9. The method according to claim 1, wherein the in the case that the vehicle is in the OTA upgrade mode, the method further comprises:
suspending from executing an auto-wake parking purging function, and resuming executing the auto-wake parking purging function after the vehicle exits the OTA upgrade mode, wherein
the auto-wake parking purging function comprises: periodically waking up a controller of the fuel cell to perform a parking purging progress of the fuel cell.

10. A device for vehicle control, comprising:
a first control module, configured to execute an OTA upgrade process after a purging process is completed when an OTA upgrade request is received during the purging process of a fuel cell of a vehicle; and
a second control module, configured to perform the purging process of the fuel cell after the OTA upgrade process is completed when a purging request for the fuel cell is received in a case that the vehicle is in an OTA upgrade mode.

11. A vehicle, comprising:
a memory, configured to store an executable program code; and
a processor, configured to invoke and run the executable program code from the memory to enable the vehicle to execute the method according to any one of claims 1 to 9.

12. A computer-readable storage medium storing a computer program, when the computer program is executed, the method according to any one of claims 1 to 9 is implemented.
